Europäisches Patentamt

European Patent Office

Office européen des brevets

(11) Publication number: **0 240 626 B1**

(12) **EUROPEAN PATENT SPECIFICATION**

(45) Date of publication of patent specification: **24.06.92**  (51) Int. Cl.⁵: **A22C 13/00**, B65D 65/40, B44C 3/04

(21) Application number: **86302561.5**

(22) Date of filing: **07.04.86**

(54) **Food package production.**

<table>
<tr><td>(43) Date of publication of application:<br>**14.10.87 Bulletin 87/42**</td><td>(73) Proprietor: **NIHON TOKKYO KANRI COMPANY LIMITED**<br>**73-2, Honkomagome 5-chome Bunkyo-ku Tokyo(JP)**</td></tr>
<tr><td>(45) Publication of the grant of the patent:<br>**24.06.92 Bulletin 92/26**</td><td>(72) Inventor: **Inagaki, Hiromichi**<br>**1-143, Aza Maedaomote**<br>**Inuyama-shi Aichi-ken(JP)**</td></tr>
<tr><td>(84) Designated Contracting States:<br>**AT BE CH DE FR GB IT LI LU NL SE**</td><td></td></tr>
<tr><td>(56) References cited:<br>**EP-A- 0 140 711**<br>**DE-A- 2 352 553**<br>**FR-A- 2 236 909**<br>**FR-A- 2 451 081**<br>**US-A- 4 424 243**</td><td>(74) Representative: **King, James Bertram**<br>**Herbert J.W. Wildbore 73 Farringdon Road**<br>**London EC1M 3JB(GB)**</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

The present invention relates to the production of a food package by containing a food filling in an open heat-shrinkable casing and thereafter closing the casing and shrinking the casing around the food filling by heating the casing. The food filling may comprise ham and/or other meat and the food package may be in the form of a sausage. In a convenient form of the process the open edges are closed with clips and the heat treatment comprises a hot water treatment to sterilise the food package and to shrink the casing around the food filling enabling the wrinkles of the casing to disappear by the shrinkage effect.

Previously, as casing material, natural materials derived from animal's intestines were used but more recently plastic films exemplified by heat-shrinkable films for example by polyvinylidene chloride and polyamide such as "Nylon" have been used. For instance DE-A-2352553 discloses a sausage consisting of a casing and a filling, wherein the casing consists of an outer film of polyamide and an inner film of polyethylene. As the traditional closing means with these types of casing, one edge of the casing formed into a circular shape is closed by a clip while the meat or other food filling is packed from the other edge and this edge is also closed by a clip, which is thus converted into a food packing by means of a smoking, heating or sterilizing procedure.

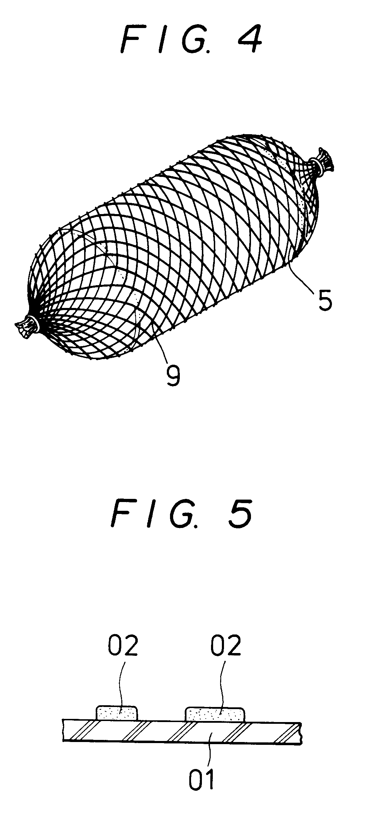

As a reminder of the era of using animals' intestines as casing material especially for hams, the configuration of the casing whose external side is closed by a string is expressed as the design of that casing, and hence the method of printing the design where a string is wound around the external side of the casing is popularly adopted. In this type of printing, however, even if the expression as a pattern can be satisfied, it is difficult to attain the state where a string is actually bound, namely the state where the string is enlarged three-dimensionally, and thus this method still fails to express fully the intended effect. Therefore, an alternative prior method is available, as shown in Figure 5 of the accompanying drawings, where heat foamed ink 02 is printed onto the surface of a casing 01 so as to attain a three dimensional impression by dint of the foamed effect of this ink, but in this case, the foamed ink appears directly onto the outer unprotected surface, and hence the printing effect not only is impaired by wear out, discolouration or water-absorption but also cannot be utilized, as such for hams or sausages that need to be heat sterilized, together with their casings, in heated water.

Also, where animals intestines are used as casing material, the unique flexibility and elasticity offered by this particular material act in a favourable manner and the closing of the casing becomes quite satisfactory when it is closed by a clip, but in the case of a casing made of a plastic film, the casing thickness at parts of the join increases, and there is a possibility that the join may become imperfect due to the appearance of a varying flexibility.

Accordingly the present invention provides a process for producing a food package by containing a food filling in an open heat-shrinkble casing comprising an inner film and an outer film and thereafter closing the casing and shrinking the casing around the food filling by heating the casing, characterised in that the heat-shrinkable casing includes a printed image defined by heat-foamable ink between the inner and outer films, and under the influence of heat the heat-foamable printed ink image is caused to foam and produce an enlarged printed image within the resultant heat-shrunk casing.

Either the inner film or the outer film may be heat-shrinkable but preferably both the inner film and the outer film are heat-shrinkable.

The food package may take the form of a sausage and the food filling may comprise ham and/or other meat.

The inner film and outer film are suitably bonded together by a bonding agent, e.g. a urethane based bonding agent. Usually the inner film and outer film are synthetic polymeric films.

In many food products it will be suitable to effect the heating by immersion in hot water to effect simultaneous sterilisation of the food and casing.

The printed image may take the form of a network or mesh.

As the inner film, such heat-shrinkage materials as heat-shrinkage "Nylon" and vinylidene choride polymer are especially suitable. The outer film is usually selected in consideration of high transparency, heat sealing performance and improved printability, and is well represented by polyethylene as one example.

However, it is also possible to use the vinylidene choride polymer film for both the inner film and the outer film.

As the heat-foamable ink, such kinds of inks are generally selected that display similar properties to print ink at ordinary temperature and swell from several times to tens of times when they are heated up.

The heat-foamable ink in this process has the properties of usual inks and can offer some optional prints with use of various kinds of printing machines, and as a specific example, reference may be made to butane contained inside a synthetic resin (thermoplastic resin mainly made of vinylidene chloride polymer) microcapsule of 10 to 30 micron grain size which is mixed and dispersed into a solution within a vehicle that is further selected, from vinyl acetate polymer, ethylene vinyl acetate polymer, acrylic resin, urethane polymer, polyester, polyamide and the like, in view of the quality of material being printed or coated and the required physical properties. The foaming agent of the above composition is mixed at adequate volume within printing ink, paint and coating agent, to become a heat-foamable type ink, paint and coating agent, and employing the substance where the micro-capsule within the ink and coating agent swells 4 to 5 times in diameter and 70 to 100 times in volume when heated at temperature level higher than 120° C.

By way of example, preferred forms of process for carrying out the invention will be described with reference to the accompanying drawings, wherein:

Figure 1     is a sectional view of part of an open heat-shrinkable casing adapted to contain a food filling;

Figure 2     is a sectional view of part of the casing of Figure 1 which now contains a food filling (not shown) and which has now been heat-shrunk,

Figure 3     is a diagrammatic perspective view of part of the casing shown in Figure 2 and is partly shown in section, and

Figure 4     is a perspective view of a ham that has been packed by the heat-shrunk casing shown in Figures 2 and 3.

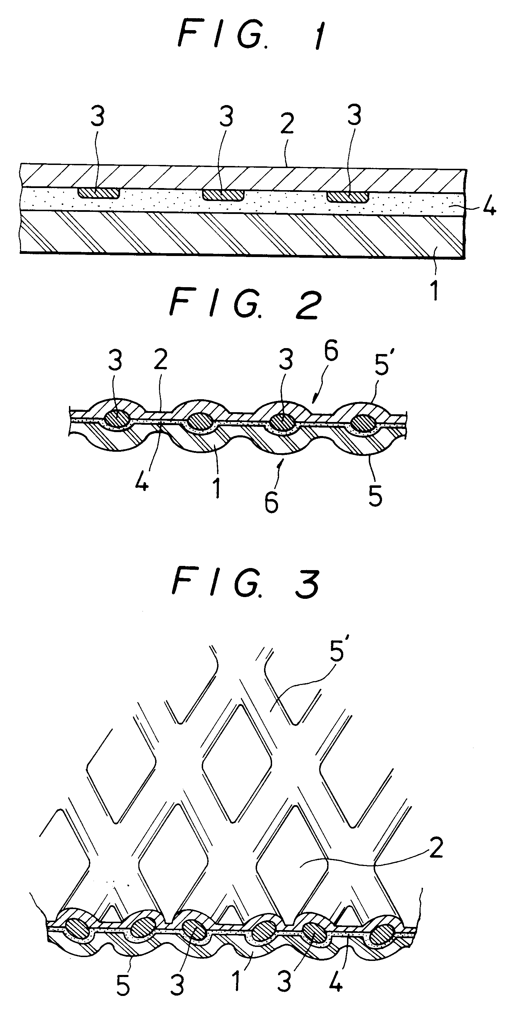

Figure 1 shows a casing adapted to contain food filling, the casing being formed of an inner film 1 consisting of heat shrinkable polyamide, e.g. "Nylon", a thermoplastic outer film 2 whose inner face (as shown in the drawing) is to be bonded to the outer surface of the inner film, and a printed image of foamable ink 3 between the films 1 and 2. The film 2 is polyethylene and the printed image is formed on the inner face of the film 2. Bonding of the two films 1,2 of the casing is effected by bonding agent, with application of heat. It is to be understood that the surface film 2 will be made of a material having the required degree of plasticity at the foaming temperature of the heat-foamable ink 3 which is chosen so as to be compatible therewith in the present process. The printing may be achieved as desired by gravure printing, flexible printing, screen printing, off-set printing or by other printing procedures.

Figure 2 shows the casing of Figure 1 after food has been introduced in the casing (the food not being shown in Figure 2) and after the food package has been subjected to heat treatment to cause the ink 3 to become foamed and the base film 1 and the surface film 2 to have become heat-shrunk and the films 1 and 2 joined together by the bonding agent 4. The heat foamed ink 3 builds up the irregular contour 6 as indicated in Figures 2 and 3 in association with the heat shrinkage of the films 1 and 2. The irregular contour is used, as shown in Figure 4, as a string or net pattern 9, for a ham casing, or to provide a label for enhancing the appearance of the casing when another type of printing is used within the casing. Refewence numeral 5' denotes the outer surface of the heat-shrunk casing and reference numeral 5 denotes the inner surface of the heat-shrunk casing.

The following advantages can be realised as seen with reference especially to Figures 1 to 3.

(a) the heat-shrunk film 2 or the heat-shrunk film 1 will serve to protect the heat-foamed ink from erasure and discolouration by virtue of the thickness of the film and resultant contoured surface;

(b) the heat-foamed printed ink image usually presents a lustrous and pleasant appearance;

(c) by employing heat-shrinkable films or both films 1 and 2, effect (a) is enhanced and the swelling effect of the heat-foamed ink is emphasised, and also the three-dimensional appearance of the heat-foamed printed image and the bouffant appearance can be extended;

(d) where clips are used to close the casing and heat-foamed ink is printed on the clipped region and this region is clipped when the casing is used to contain ham or other meat and/or the casing is a sausage casing, the clamping force in this clipped region becomes increased by the heat-foaming action, thereby producing more effective closing of the casing and avoiding or minimising the danger of pin holes.

## Claims

1. A process for producing a food package by containing a food filling in an open heat-shrinkable casing comprising an inner film and an outer film and thereafter closing the casing and shrinking the casing around the food filling by heating the casing, characterised in that the heat-shrinkable casing includes a printed image defined by heat-foamable ink between the inner and outer films, and under the influence of heat the heat-foamable printed ink image is caused to foam and produce an enlarged printed image within the resultant heat-shrunk casing.

2. A process according to Claim 1, wherein either the inner film or the outer film is heat-shrinkable.

3. A process according to Claim 1, wherein both the inner film and the outer film are heat-shrinkable.

4. A process according to any preceding claim, wherein the food package is a sausage.

5. A process according to any preceding claim, wherein the inner film and outer film are bonded together by a bonding agent.

6. A process according to Claim 5, wherein the bonding agent is a urethane based bonding agent.

7. A process according to any preceding claim, wherein the heating is effected by immersion in hot water to effect simultaneous sterilisation of the food and casing.

8. A process according to any preceding claim, wherein the food filling comprises ham and/or other meat.

9. A process according to any preceding claim, wherein the inner film and outer film are synthetic polymeric films.

10. A process according to any preceding claim, wherein the printed image takes the form of a network or mesh.

**Revendications**

1. Procédé pour produire un emballage pour produit alimentaire, et/ou un produit alimentaire emballé, en introduisant un produit alimentaire de garnissage dans une enveloppe ouverte, thermorétractible, comprenant une pellicule intérieure et une pellicule extérieure, puis en fermant l'enveloppe et en en provoquant le rétrécissement autour du produit alimentaire de garnissage, par chauffage de l'enveloppe, procédé caractérisé en ce que l'enveloppe thermorétractible comprend une image imprimée, définie par une encre, pouvant mousser à chaud, image disposée entre les pellicules intérieure et extérieure et en ce qu'on provoque le moussage, sous l'influence de la chaleur, de l'image imprimée à l'aide d'une encre pouvant mousser à chaud, et l'on produit, au sein de l'enveloppe résultante qui s'est rétractée sous l'effet de la chaleur, une image imprimée agrandie.

2. Procédé selon la revendication 1, dans lequel la pellicule intérieure ou bien la pellicule extérieure peut rétrécir par chauffage.

3. Procédé selon la revendication 1, dans lequel la pellicule intérieure ainsi que la pellicule extérieure peuvent toutes deux rétrécir par chauffage.

4. Procédé selon l'une quelconque des revendications précédentes, dans lequel le produit alimentaire emballé est une saucisse ou un saucisson.

5. Procédé selon l'une quelconque des revendications précédentes, dans lequel la pellicule intérieure et la pellicule extérieure sont reliées ou collées ensemble à l'aide d'un agent de liaison ou de collage.

6. Procédé selon la revendication 5, dans lequel l'agent de liaison ou de collage est un agent de collage à base d'uréthanne.

7. Procédé selon l'une quelconque des revendications précédentes, dans lequel on effectue le chauffage par immersion dans de l'eau chaude pour réaliser simultanément la stérilisation du produit alimentaire et de son enveloppe.

8. Procédé selon l'une quelconque des revendications précédentes, dans lequel le garnissage alimentaire comprend du jambon et/ou une autre chair.

9. Procédé selon l'une quelconque des revendications précédentes, dans lequel la pellicule intérieure et la pellicule extérieure sont des pellicules polymères synthétiques.

10. Procédé selon l'une quelconque des revendications précédentes, dans lequel l'image imprimée prend la forme d'un filet ou treillis.

**Patentansprüche**

1. Verfahren zur Herstellung einer Verpackung für Nahrungsmittel mit den Verfahrensschritten Einfüllen eines Nahrungsmittels in eine offene, eine innere und eine äußere Folie umfassende warmschrumpfende Umhüllung, anschließendes Verschließen der Umhüllung sowie Schrumpfen der Umhüllung auf der Nahrungsmittelfüllung durch Erwärmen der Umhüllung, **dadurch gekennzeichnet, daß** die warmschrumpfende Umhüllung ein zwischen der inneren und äußeren Folie angeordnetes gedrucktes Muster aus warmschäumender Farbe umfaßt und daß unter der Einwirkung von Wärme das gedruckte Muster aus warmschäumender Farbe zum Aufschäumen gebracht und dadurch ein vergrößertes gedrucktes Muster innerhalb der fertigen warmgeschrumpften Umhüllung erzeugt wird.

2. Verfahren nach Anspruch 1, **dadurch gekennzeichnet, daß** entweder die innere oder die äußere Folie warmschrumpfend ist.

3. Verfahren nach Anspruch 1, **dadurch gekennzeichnet, daß** sowohl die innere als auch die äußere Folie warmschrumpfend ist.

4. Verfahren nach einem der vorhergehenden Ansprüche, **dadurch gekennzeichnet, daß** die Nahrungsmittelfüllung eine Wurstfüllung ist.

5. Verfahren nach einem der vorhergehenden Ansprüche**, dadurch gekennzeichnet, daß** die innere und äußere Folie durch ein Haftmittel miteinander verbunden sind.

6. Verfahren nach Anspruch 5, **dadurch gekennzeichnet, daß** das Haftmittel ein Haftmittel auf Urethan-Basis ist.

7. Verfahren nach einem der vorhergehenden Ansprüche**, dadurch gekennzeichnet, daß** das Erwärmen durch Eintauchen in heißes Wasser zwecks gleichzeitiger Sterilisierung von Nahrungsmittelfüllung und Umhüllung erfolgt.

8. Verfahren nach einem der vorhergehenden Ansprüche**, dadurch gekennzeichnet, daß** die Nahrungsmittelfüllung Schinken und/oder anderes Fleisch umfaßt.

9. Verfahren nach einem der vorhergehenden Ansprüche**, dadurch gekennzeichnet, daß** die innere und äußere Folie aus synthetischen Polymerfolien bestehen.

10. Verfahren nach einem der vorhergehenden Ansprüche**, dadurch gekennzeichnet, daß** das gedruckte Muster die Form eines Netzwerkes oder eines Gitters aufweist.

EP 0 240 626 B1

# F I G. 1

# F I G. 2

# F I G. 3

EP 0 240 626 B1

# FIG. 4

5

9

# FIG. 5

02    02

01

7